(19)

**Europäisches Patentamt**
**European Patent Office**
**Office européen des brevets**

(11) **EP 1 323 740 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(51) Int Cl.:
**C08F 2/22** (2006.01)     **C09J 157/00** (2006.01)

(21) Anmeldenummer: **02028834.6**

(22) Anmeldetag: **23.12.2002**

(54) **Wässrige Polymerdispersionen, ihre Herstellung und ihre Verwendung**

Aqueous polymer dispersions, their preparation and their use

Dispersions aqueuses de polymères, leur préparation et leur usage

(84) Benannte Vertragsstaaten:
**AT BE BG CH CY CZ DE DK EE ES FI FR GB GR IE IT LI LU MC NL PT SE SI SK TR**

(30) Priorität: **27.12.2001 DE 10164183**
**06.03.2002 DE 10209817**

(43) Veröffentlichungstag der Anmeldung:
**02.07.2003 Patentblatt 2003/27**

(73) Patentinhaber: **BASF SE**
**67056 Ludwigshafen (DE)**

(72) Erfinder:
• **Wulff, Dirk**
**67105 Schifferstadt (DE)**
• **Centner, Alexander**
**67435 Neustadt (DE)**
• **Auchter, Gerhard**
**67098 Bad Dürkheim (DE)**

(56) Entgegenhaltungen:
**EP-A- 0 037 923     WO-A-98/10001**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung wässriger Polymerdispersionen, die nach dem Verfahren erhältlichen Polymerdispersionen sowie ihre Verwendung, insbesondere zur Herstellung von Haftklebstoffen.

Wässrige Polymerdispersionen finden in vielfältiger Weise Anwendung, beispielsweise als Beschichtungsmittel oder als Imprägnierung für Papier oder Leder, als Bindemittel in z.B. Dispersionsfarben, Spachtelmassen oder in kunstharzgebundenen Putzen, weiterhin als Modifikatoren für mineralische Bindebaustoffe sowie als Klebstoffe oder Klebrohstoffe.

Verschiedentlich wurden im Stand der Technik Polymerdispersionen vorgeschlagen, worin die Polymerteilchen wenigstens zwei voneinander verschiedene Polymerphasen umfassen. Derartige Polymerdispersionen werden in der Regel dadurch hergestellt, dass man zunächst eine erste wässrige Polymerdispersion herstellt (1. Stufe) und in der dabei erhaltenen wässrigen Polymerdispersion eine Emulsionspolymerisation von im Wesentlichen hydrophoben Monomeren durchführt (2. Stufe). Dieser 2. Stufe können auch weitere Stufen (Stufen i) folgen. Diese Vorgehensweise wird als Stufenpolymerisation bezeichnet.

Bei der Stufenpolymerisation entstehen wässrige Polymerdispersionen, worin die Polymerteilchen überwiegend sowohl das Polymer der ersten Polymerisationsstufe als auch das Polymer der zweiten, bzw. der weiteren Polymerisationsstufe enthalten. Wässrige Polymerdispersionen, deren Polymerteilchen zwei voneinander verschiedene Polymere umfassen, weisen in der Regel andere anwendungstechnische Eigenschaften auf als Mischungen zweier Dispersionen, die jeweils die eine bzw. die andere Sorte an Polymeren enthalten. Die Stufenpolymerisation wird daher häufig zur Modifizierung der anwendungstechnischen Eigenschaften von wässrigen Polymerdispersionen eingesetzt.

Eine besondere Variante der Modifizierung wässriger Polymerdispersionen durch Stufenpolymerisation wird in der WO 98/10001 beschrieben. Hier wird zunächst eine erste wässrige Polymerdispersion durch konventionelle Emulsionspolymerisation hergestellt. Hierzu gibt man dann weitere Monomere, die für sich gesehen ebenfalls nach einer Emulsionspolymerisation polymerisieren können.

Anschließend wird eine Polymerisation der zugegebenen Monomere unter den Bedingungen einer chemischen Desodorierung durch Zugabe eines neuen Initiators ausgelöst. Nach Beendigung der ersten Polymerisationsstufe wird die Polymerisationsreaktion unterbrochen. Hierzu wird der Reaktor in der Regel auf eine Temperatur gekühlt, bei der eine radikalische Polymerisation nicht mehr stattfinden kann, beispielsweise auf etwa 40°C. Dann werden die Monomere der zweiten Polymerisationsstufe zugegeben. Nach Beendigung dieser Monomerzugabe erwärmt man dann auf die erforderliche Polymerisationstemperatur und gibt danach den zur Polymerisation der Monomere der 2. Polymerisationsstufe erforderlichen Polymerisationsinitiator zu. Hierdurch wird erreicht, dass die Monomere der zweiten Stufe das Polymerisat der ersten Stufe quellen und anschliessend in den Polymerteilchen auspolymerisierten. Auf diese Weise erreicht man bessere anwendungstechnische Eigenschaften des Polymerisats im Vergleich zu konventionell hergestellten mehrphasigen Polymerisaten. Diese Vorgehensweise birgt einige Nachteile. Zum einen erfordert das Abkühlen und erneute Erwärmen einen zusätzlichen Energieaufwand. Weiterhin verlängert sich durch das Abkühlen und Wiedererwärmen die Reaktionsdauer (Cykluszeit), was letztendlich eine schlechtere Raum-Zeit-Ausbeute zur Folge hat. Zudem hat sich gezeigt, dass die anwendungstechnischen Eigenschaften, insbesondere im Hinblick auf die Verwendung der Polymerisate als Haftklebstoffe, häufig nicht zufriedenstellend sind.

Der vorliegenden Erfindung liegt somit die Aufgabe zugrunde, ein mehrstufiges radikalisches wässriges Emulsionspolymerisationsverfahren für ethylenisch ungesättigte Monomere bereitzustellen, das die verfahrenstechnischen Nachteile des Standes der Technik überwindet, ohne dass Einbußen hinsichtlich der anwendungstechnischen Eigenschaften der Dispersionen in Kauf genommen werden müssen. Weiterhin sollen die nach dem Verfahren hergestellten Polymerdispersionen im Bereich von Haftklebstoffen bessere anwendungstechnische Eigenschaften aufweisen.

Es wurde überraschenderweise gefunden, dass diese Aufgabe durch ein mehrstufiges Emulsionspolymerisationsverfahren gelöst wird, bei dem man die Polymerisation der zweiten und der gegebenenfalls weiteren Polymerisationsstufen in Gegenwart des in der 1. Polymerisationsstufe eingesetzten Initiators durchführt und die Temperatur im Reaktionsgefäß von Beginn der 1. Polymerisationsstufe bis zur Beendigung der letzten Polymerisationsstufe stets wenigstens 70°C beträgt.

Demnach betrifft die vorliegende Erfindung ein Verfahren zur Herstellung wässriger Polymerdispersionen durch eine wenigstens 2-stufige radikalische wässrige Emulsionspolymerisation ethylenisch ungesättigter Monomere, umfassend:

1. eine erste Polymerisationsstufe 1, bei der man eine erste Monomerzusammensetzung M(1) nach einem Monomerzulaufverfahren durch Zugabe eines die radikalische Polymerisation auslösenden Initiators I(1) polymerisiert, wobei man eine wässrige Dispersion eines Polymerisats P(1) erhält, und

2. eine weitere Polymerisationsstufe 2, bei der man

2a. eine Monomerzusammensetzung M(2), die eine andere Monomerzusammensetzung als die Monomerzusammensetzung M(1) aufweist, in unverdünnter Form zu der wässrigen Dispersion des Polymeren P(1) gibt, und

2b. die Monomerzusammensetzung M(2) polymerisiert und

3. gegebenenfalls zur Durchführung weiterer Polymerisationsstufen i die Schritte 2a und 2b wiederholt,

wobei die Gesamtmenge der Monomere M(2) 0,1 bis 20 Gew.-% der in Stufe 1 polymerisierten Monomere M(1) ausmacht und die Zugabe der Monomermischung M(2) nicht vor Beendigung der Zugabe der Monomermischung M(1) erfolgt, dadurch gekennzeichnet, daß die Polymerisation in der Polymerisationsstufe 2 und den gegebenenfalls weiteren Polymerisationsstufen i in Gegenwart von Restmengen des in der 1. Stufe zugegebenen Initiators I(1) oder durch Zugabe von weiterem Initiator I(1) erfolgt und von Beginn des Schritts 1 bis zur Beendigung des Schritts 2b in der letzten Polymerisationsstufe die Temperatur im Reaktionsgefäß wenigstens 70°C beträgt.

Unter Monomerzusammensetzung versteht man hier und im Folgenden die in der jeweiligen Stufe zu polymerisierenden Monomere und gegebenenfalls deren Mischung mit polymerisationsaktiven Verbindungen wie Reglern.

Erfindungsgemäß erfolgt die Zugabe der in der zweiten Polymerisationsstufe zu polymerisierende Monomermischung M(2) nicht vor Beendigung der Zugabe der Monomermischung M(1). Für die gegebenenfalls folgenden Polymerisationsstufen i gilt Vergleichbares im Hinblick auf die jeweils vorangegangene Polymerisationsstufe i-1, wobei die Laufzahl i für die jeweilige Nummer der Polymerisationsstufe steht. Vorzugsweise beträgt das Zeitintervall zwischen der Beendigung der Zugabe der Monomere M(1) und dem Beginn der Zugabe der Monomere M(2) wenigstens 5 min, vorzugsweise wenigstens 10 min und insbesondere wenigstens 15 min. In der Regel wird dieses Zeitintervall eine Dauer von 1,5 h, vorzugsweise 1 h und insbesondere 45 min nicht überschreiten.

Vorzugsweise wird die Polymerisation der 1. Polymerisationsstufe vor Zugabe der Monomere M(2) soweit geführt, daß der Umsatz der in der ersten Polymerisationsstufe polymerisierten Monomere M(1) wenigstens 95 % und insbesondere wenigstens 98 % beträgt. Der Umsatz der Monomere M(1) in der 1. Stufe zum Zeitpunkt t kann in an sich bekannter Weise bestimmt werden, beispiel durch Abstoppen der Polymerisation in einer Probe mittels eines Stoppers oder durch Verfolgung der Wärmetönung der Polymerisationsreaktion. Als Stopper kommen die üblichen Polymerisationsinhibitoren, beispielsweise Hydrochinon oder Phenothiazin in betracht, welche üblicherweise in Form von Lösungen, z.B. in Alkoholen eingesetzt werden.

Die Zugabe der Monomere M(2) erfolgt in unverdünnter bzw. in Reinform, d.h. nicht in Form einer wässrigen Emulsion und nicht in Form einer Lösung. Unter Reinform versteht man übliche Monomerqualitäten, wie sie die in einer Emulsionspolymerisation eingesetzten Monomere üblicherweise aufweisen. Die Zugabe der Monomere M(2) sollte möglichst rasch erfolgen und beträgt je nach der Menge der zugeführten Monomere in der Regel nicht mehr als 1 Stunde, vorzugsweise nicht mehr als 30 min und insbesondere nicht mehr als 15 min. Ohne an eine Theorie gebunden zu sein, nimmt man an, dass hierdurch eine Quellung des Polymerisats der 1. Polymerisationsstufe durch die Monomere M(2) bewirkt wird, bevor die Monomere M(2) in der 2. Polymerisationsstufe polymerisiert sind.

Erfindungsgemäß wird die Polymerisation der Monomermischung M(2) in der zweiten Polymerisationsstufe durch den in der ersten Stufe eingesetzten Initiator I(1) ausgelöst. Hierzu geht man in der Regel so vor, das man die Zugabe des Initiators I(1) in der 1. Polymerisationsstufe nicht eher beendet, bevor nicht alle Monomere M(1) unter Polymerisationsbedingungen, d.h. oberhalb 70°C in das Polymerisationsgefäß gegeben wurden. Man kann aber auch die Zugabe des Initiators I(1) über diesen Zeitpunkt hinaus z.B. bis zu Beginn oder bis zur Beendigung der Zugabe der Monomere M(2) bzw. M(i) oder auch darüber hinaus fortsetzen. Selbstverständlich kann man auch so vorgehen, daß man die Zugabe des Initiators mit oder nach Beendigung der Zugabe von M(1) unterbricht und dann erneut die Zugabe des Initiators I(1) aufnimmt. In einer bevorzugten Ausführungsform beendet man die Zugabe von I(1) frühestens bei Beendigung der Zugabe der Monomere M(1) und spätestens vor Zugabe der Monomere M(2) z.B. spätestens 30 min und speziell spätestens 15 min nach Beendigung der Zugabe der Monomere M(1). In einer anderen Ausführungsform unterbricht man die Zugabe des Initiators mit oder spätestens 15 min nach Beendigung der Zugabe der Monomere M(1). Man nimmt dann die Initiatorzugabe nach einer kurzfristigen Unterbrechung z.B. mit Beginn oder bei Beendigung der Zugabe der Monomere M(2) oder dazwischen wieder auf. In einer weiteren Ausführungsform gibt man über den Zeitpunkt der Beendigung der Zugabe von M(1) hinaus bis zur Beendigung der Zugabe der Monomere M(2) bzw. M(i) den Initiator I(1) zu. Anders als in anderen Verfahren des Standes der Technik ist jedoch die Zugabe eines weiteren Initiators nach Zugabe der Monomere M(2) nicht erforderlich.

Erfindungsgemäß erfolgt die Durchführung aller Polymerisationsschritte bei Temperaturen von wenigstens 70°C, vorzugsweise wenigstens 75°C und insbesondere wenigstens 80°C.

Als Polymerisationsinitiatoren I(1) sind grundsätzlich alle Initiatoren geeignet, die bei Temperaturen oberhalb 70°C eine kontrollierte radikalische Emulsionspolymerisation auslösen können. Hierzu zählen anorganische Peroxide, insbesondere Peroxodisulfate, wie Alkalimetall- und Ammoniumperoxodisulfate, z.B. Natriumperoxodisulfat, weiterhin organische Peroxide und Hydroperoxide wie tert.-Butylperoxid, Cumolhydroperoxid, Pinanhydroperoxid, Diisopropylphenylhydroperoxid, Dibenzoylperoxid, Dilauroylperoxid und Diacetylperoxid. Geeignet sind auch sogenannte Redoxinitiatorsysteme, die neben einem organischen Peroxid und/oder Hydroperoxid eine reduzierend wirkende Komponente enthalten. Als reduzierend wirkende Komponenten kommen insbesondere Alkalimetallsulfite, Ascorbinsäure, Acetonbisulfit-Addukt sowie die Alkalimetallsalze der Hydroxymethansulfinsäure in Betracht.

Als Initiatorsysteme I(1) werden insbesondere die anorganischen Peroxide, insbesondere die Peroxodisulfate eingesetzt. Die Menge des jeweiligen Initiators, bezogen auf die jeweils in einer Polymerisationsstufe polymerisierten Monomere hängt in an sich bekannter Weise von der Art des Initiators und der Art der polymerisierten Monomere ab. Üblicherweise liegt sie im Bereich von 0,1 bis 2 Gew.-% und insbesondere im Bereich von 0,2 bis 1 Gew.-%, bezogen auf die Gesamtmenge der in allen Polymerisationsstufen polymerisierten Monomere.

Gegenüber den Verfahren des Standes der Technik, z.B. denen der WO 98/10001, zeichnet sich das erfindungsgemäße Verfahren dadurch aus, dass ein Abkühlen der Reaktionsmischung nach Herstellung des Polymerisats P1 und vor Zugabe der Monomere M(2) nicht erforderlich ist. Hierdurch wird die Energiebilanz des Verfahrens verbessert und die Cycluszeiten verkürzt bzw. die Raum-Zeit-Ausbeute erhöht. Auch der Zusatz eines von I(1) verschiedenen Initiators zur Auslösung der Polymerisation der Monomere M(2) ist überraschenderweise nicht erforderlich.

Das erfindungsgemäße Verfahren ist grundsätzlich geeignet zur Herstellung unterschiedlichster mehrphasiger Emulsionspolymerisate, wobei Anteil der in der zweiten und den weiteren Polymerisationsstufen polymerisierten Monomeren M(2) und gegebenenfalls M(i) nicht mehr als 20 Gew.-%, vorzugsweise nicht mehr als 15 Gew.-% und insbesondere nicht mehr als 10 Gew.-% der in der Polymerisationsstufe 1 polymerisierten Monomere M(1) ausmacht. In der Regel beträgt die Gesamtmenge aller Monomere [M(2)+ΣM(i)] 0,1 bis 20 Gew.-%, bevorzugt 0,5 bis 15 Gew.-% und insbesondere 1 bis 10 Gew.-%, bezogen auf die Menge der Monomere M(1).

Es versteht sich von selber, dass zur Erreichung einer Modifizierung die in der ersten Polymerisationsstufe eingesetzte Monomermischung M(1) von der in der zweiten bzw. in den weiteren Polymerisationsstufen polymerisierten Monomermischungen M(2) bzw. M(i) voneinander verschieden sind. Diese Unterschiede finden in der Regel in physikalischen Parametern wie Glasübergangstemperatur, Hydrophilie oder Quellbarkeit ihren Ausdruck. Das erfindungsgemäße Verfahren wird vorzugsweise zur Herstellung solcher Polymerisate eingesetzt, deren Polymerphasen unterschiedliche Glasübergangstemperaturen aufweisen, wobei vorzugsweise die in der zweiten Polymerisationsstufe hergestellten Polymerisate P(2) eine höhere Glasübergangstemperatur aufweisen als die in der ersten Polymerisationsstufe hergestellten Polymerisate P(1).

Hierbei erweist es sich oft als hilfreich, die Glasübergangstemperatur Tg des dispergierten Polymers anhand der Monomerzusammensetzung abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von Mischpolymerisaten bei großen Molmassen in guter Näherung

$$\frac{1}{T_g} = \frac{X^1}{T_g^1} + \frac{X^2}{T_g^2} + \cdots \frac{X^n}{T_g^n}$$

wobei $X^1$, $X^2$, ..., $X^n$ die Massenbrüche der Monomeren 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

In der Regel wird man bei der Herstellung so vorgehen, dass man in der ersten Polymerisationsstufe ein Polymerisat P(1) herstellt, das eine Glasübergangstemperatur $T_g^1$ aufweist und die Monomermischung M(2) bzw. M(i) so wählt, dass sie einem Polymerisat P(2) bzw. P(i) mit einer theoretischen Glasübergangstemperatur $T_g^2$ bzw. $T_g^i$ entspricht (berechnet nach Fox), die wenigstens 10 Kelvin, vorzugsweise wenigstens 20 Kelvin und insbesondere wenigstens 40 Kelvin oberhalb von $T_g^1$ liegt.

Eine bevorzugte Ausführungsform des erfindungsgemäßen Verfahrens betrifft die Herstellung von Emulsionspolymerisaten, die als Klebstoffe oder als Klebstoffkomponente in Haftklebstoffen eingesetzt werden können. Erfindungsgemäß sind dabei solche Emulsionspolymerisate bevorzugt, bei denen das Polymerisat P(1) eine Glasübergangstemperatur $T_g^1$ von nicht mehr als 0°C, vorzugsweise nicht mehr als -10°C und besonders bevorzugt im Bereich von -20°C bis -60°C aufweist. Dementsprechend wird man die Zusammensetzung der in der ersten Polymerisationsstufe eingesetzten Monomermischung M(1) so wählen, dass sie einem Polymerisat P(1) mit den oben angegebenen Glasübergangstemperaturen $T_g^1$ entspricht. Die Monomermischung M(2) bzw. M(i) wird vorzugsweise so gewählt, dass die der Monomerzusammensetzung entsprechende theoretische Glasübergangstemperatur $T_g^2$ bzw. $T_g^i$ wenigstens 0°C, vorzugsweise wenigstens 5°C und insbesondere wenigstens 10°C beträgt. In einer Ausführungsform der Erfindung liegt $T_g^2$ bzw. $T_g^i$ im Bereich von 10°C bis 40°C. In einer anderen Ausführungsform liegt $T_g^2$ bzw. $T_g^i$ oberhalb 40°C.

Soweit die Emulsionspolymerisate als Bindemittel für lösungsmittelfreie Dispersionsfarben eingesetzt werden sollen, wird man die Zusammensetzung der Monomermischung M(1) in der Regel so wählen, dass ein Polymerisat P (1) resultiert, dessen Glasübergangstemperatur $T_g^1$ im Bereich von -20 bis +30°C und vorzugsweise im Bereich von -10 bis +15°C liegt. Die Glasübergangstemperaturen $T_g^2$ bzw. $T_g^i$ betragen vorzugsweise wenigstens 40°C, insbesondere wenigstens 60 und besonders bevorzugt wenigstens 80°C.

Hinsichtlich der Art der zu polymerisierenden Monomere bestehen grundsätzlich keinerlei Einschränkungen. Geeignet sind grundsätzlich alle Monomere und Monomermischungen, die sich nach der Methode einer radikalischen wässrigen Emulsionspolymerisation polymerisieren lassen. Üblicherweise umfassen daher sowohl die Monomermischung M(1) als auch die Monomere M(2) der zweiten Polymerisationsstufe bzw. die Monomere M(i) der weiteren Polymerisationsstufen i wenigstens 80 Gew.-% und vorzugsweise wenigstens 90 Gew.-%, bezogen jeweils auf die jeweilige Monomermischung, monoethylenisch ungesättigte bzw. konjugiert diethylenisch ungesättigte, hydrophobe Monomere, d.h. Monomere mit einer Wasserlöslichkeit von höchstens 30 g/l (bei 25°C und 1 bar). Typische hydrophobe Monomere sind ausgewählt unter vinylaromatischen Monomeren wie Styrol, $\alpha$-Methylstyrol, ortho-Chlorstyrol oder Vinyl-toluolen, Vinylestern von $C_1$-$C_{18}$-, vorzugsweise $C_1$-$C_{12}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat, Vinylstearat und Vinylester der Versatic®-Säuren (Versatic®-Säuren sind verzweigte, aliphatische Carbonsäuren mit 5 bis 11 C-Atomen). Weiterhin kommen als hydrophobe Monomere Ester $\alpha,\beta$-ethylenisch ungesättigter $C_3$-$C_{10}$-Mono- oder Dicarbonsäuren mit $C_1$-$C_{20}$-, vorzugsweise $C_1$-$C_{12}$- und insbesondere $C_1$-$C_8$-Alkanolen oder $C_5$-$C_8$-Cycloalkanolen in Betracht. $C_1$-$C_{20}$-Alkanole sind beispielsweise Methanol, Ethanol, n-Propanol, i-Propanol, 1-Butanol, 2-Butanol, Isobutanol, tert.-Butanol, n-Hexanol, 2-Ethylhexanol, n-Decanol, Laurylalkohol und Stearylalkohol. Geeignete Cycloalkanole sind beispielsweise Cyclopentanol und Cyclohexanol. Beispiele für derartige Monomere sind die Alkylacrylate und die Alkylmethacrylate wie Acrylsäureethylester, Acrylsäureisopropylester, Acrylsäure-n-butylester, Acrylsäureisobutylester, Acrylsäure-1-hexylester, Acrylsäure-tert.-butylester, Acrylsäure-2-ethylhexylester, Acrylsäure-2-laurylester, Acrylsäure-2-stearylester, Methacrylsäuremethylester, Methacrylsäureethylester, Methacrylsäureisopropylester, Methacrylsäure-n-butylester, Methacrylsäureisobutylester, Methacrylsäure-1-hexylester, Methacrylsäure-tert.-butylester, Methacrylsäure-2-ethylhexylester, Methacrylsäure-2-laurylester, Methacrylsäure-2-stearylester, sowie die Dialkylester der Maleinsäure, der Itaconsäure oder der Fumarsäure wie Maleinsäuredimethylester, Maleinsäuredi-n-butylester und Fumarsäuredi-n-butylester. Geeignete hydrophobe Monomere sind auch konjugierte Diene mit vorzugsweise 4 bis 10 C-Atomen, wie 1,3-Butadien, Isopren oder Chloropren, Olefine mit vorzugsweise 2 bis 6 C-Atomen, wie Ethylen, Propen, 1-Buten und Isobuten, oder Vinylchlorid.

Neben den vorgenannten monoethylenisch ungesättigten, hydrophoben Monomeren können die in den einzelnen Polymerisationsstufen zu polymerisierenden Monomere auch ein oder mehrere, davon verschiedene Comonomere umfassen. Der Anteil der Comonomere, bezogen auf die jeweils in einer Polymerisationsstufe zu polymerisierenden Monomere, wird in der Regel 20 Gew.-% und vorzugsweise 10 Gew.-% nicht überschreiten. In der Monomermischung M(1) liegt der Anteil der Comonomere in der Regel im Bereich von 0,1 bis 20 Gew.-%, vorzugsweise im Bereich von 0,2 bis 10 Gew.-%. Der Anteil an Comonomeren in der zweiten und den weiteren Polymerisationsstufen beträgt in der Regel nicht mehr als 10 Gew.-% und insbesondere nicht mehr als 5 Gew.-%, bezogen auf die in dieser Polymerisationsstufe zu polymerisierenden Monomere M(2) bzw. M(i). In einer besonders bevorzugten Ausführungsform umfassen die Monomere M(2) und M(i) ausschließlich oder nahezu ausschließlich (d.h. $\geq$ 99,9 Gew.-%) monoethylenisch ungesättigte hydrophobe Monomere der vorstehenden Art.

Als Comonomere kommen grundsätzlich alle mono- und polyethylenisch ungesättigten Monomere in Betracht, die sich unter den Bedingungen einer radikalischen wässrigen Emulsionspolymerisation mit den hydrophoben Monomeren copolymerisieren lassen. Derartige Monomere sind dem Fachmann grundsätzlich bekannt und umfassen:

- begrenzt wasserlösliche monoethylenisch ungesättigte Monomere (Löslichkeit im Bereich von 30 bis 150 g/l bei 25°C und 1 bar) wie Methylacrylat, Acrylnitril und Methacrylnitril. Der Anteil derartiger Monomere kann bis zu 20 Gew.-% und vorzugsweise bis zu 10 Gew.-%, bezogen auf die in der Polymerisationsstufe zu polymerisierenden Monomere betragen;

- monoethylenisch ungesättigte neutrale Monomere mit einer Wasserlöslichkeit von mehr als 150 g/l (bei 25°C und 1 bar), beispielsweise Amide monoethylenisch ungesättigter Carbonsäuren wie Acrylamid, Methacrylamid, Hydroxy-$C_2$-$C_4$-alkylester monoethylenisch ungesättigter Carbonsäuren wie 2-Hydroxyethylacrylat, 2-Hydroxyethylmethacrylat, 2- und 3-Hydroxypropyl(meth)acrylat sowie 4-Hydroxybutyl(meth)acrylat, Ester monoethylenisch ungesättigter Carbonsäure mit Oligo- und Polyalkylenglycolen oder mit Monoalkylethern von Oligo- und Polyalkylenglycolen mit Alkoxylierungsgraden z.B. im Bereich von 2 bis 200, z.B. Methylpolyethylenglycolacrylat und Methylpolyethylenglycolmethacrylat mit Alkoxylierungsgraden z.B. im Bereich von 2 bis 100. Der Anteil derartiger Monomere beträgt in der Regel nicht mehr als 10 Gew.-% und insbesondere nicht mehr als 5 Gew.-%;

- monoethylenisch ungesättigte Monomere mit wenigstens einer Säuregruppe, z.B. monoethylenisch ungesättigte Carbonsäuren wie Acrylsäure, Methacrylsäure, Vinylessigsäure, Crotonsäure und Itakonsäure, monoethylenisch ungesättigte Sulfonsäuren wie Vinyl- und Allylsulfonsäure, Acryloxyethylsulfonsäure, 2-Acrylamido-2-methylpropansulfonsäure, monoethylenisch ungesättigte Phosphonsäuren wie Vinylphosphonsäure, Allyl- und Methallylphosphonsäure sowie 2-Acrylamido-2-methylpropanphosphonsäure sowie die Salze der vorgenannten monoethylenisch ungesättigten Säuren, vorzugsweise die Alkalimetallsalze und die Ammoniumsalze. Der Anteil derartiger Monomere wird in der Regel nicht mehr als 5 Gew.-% betragen und liegt bei den Monomeren M(1) vorzugsweise im Bereich von 0,1 bis 5 Gew.-% und insbesondere im Bereich von 0,1 bis 2 Gew.-%, bezogen auf die Monomere M(1). Vorzugsweise enthalten die Monomere M(2) bzw. M(i) keine oder nicht mehr als 1 Gew.-%, vorzugsweise nicht mehr als 0,1 Gew.-%, der vorgenannten Monomere mit einer Säurefunktion.

- zwei- oder mehrfach ethylenisch ungesättigte Monomere, die bei der Polymerisation zu einer Vernetzung führen. Es handelt sich in der Regel um Monomere, die zwei nicht-konjugierte, ethylenisch ungesättigte Bindungen aufweisen, z.B. die Diester zweiwertiger Alkohole mit $\alpha,\beta$-monoethylenisch ungesättigten $C_3$-$C_8$-Monocarbonsäuren, wie Glycolbisacrylat, Propandiolbisacrylat, Butandiolbisacrylat, Hexandiolbisacrylat, Diethylenglycolbisacrylat und Triethylenglycolbisacrylat sowie die entsprechenden Methacrylate, um Ester von $\alpha,\beta$-ungesättigten Monocarbonsäuren mit Alkenolen wie Bicyclodecenyl(meth)acrylat weiterhin Divinylbenzol, N,N'-Divinylharnstoff, N,N'-Divinylimidazolidon, Diallylphthalat und dergleichen. Vorzugsweise beträgt der Anteil derartiger Monomere an den in der 1. Polymerisationsstufe zu polymerisierenden Monomeren M(1) nicht mehr als 5 Gew.-%. In einer bevorzugten Ausführungsform des erfindungsgemäßen Verfahrens enthält die Monomermischung M(1) keine oder nicht mehr als 0,1 Gew.-%, insbesondere nicht mehr als 0,01 Gew.-%, bezogen auf die Monomermischung M(1) derartiger Monomere. Der Anteil derartiger Monomere in der Monomermischung M(2) bzw. M(i) wird in der Regel nicht mehr als 1 Gew.-%, bezogen auf die jeweilige Monomermischung betragen. In einer bevorzugten Ausführungsform des erfindungsgemäßen Verfahrens enthalten die Monomermischungen M(2) bzw. M(i) keine oder nicht mehr als 0,1 Gew.-%, insbesondere nicht mehr als 0,01 Gew.-% derartiger Monomere.

Das erfindungsgemäße Verfahren eignet sich insbesondere zur Herstellung solcher Emulsionspolymerisate, deren Polymerphase P(1) im Wesentlichen aus einer Mischung wenigstens eines $C_2$-$C_{20}$-Alkylacrylats und wenigstens einem weiteren Monomer, ausgewählt unter Methylacrylat, $C_1$-$C_4$-Alkylmethacrylaten, vinylaromatischen Monomeren, Acrylnitril und Methacrylnitril aufgebaut ist. Dementsprechend umfasst in einer bevorzugten Ausführungsform des erfindungsgemäßen Verfahrens die Monomermischung M(1) 90 bis 99 Gew.-% und insbesondere 95 bis 99,9 Gew.-% einer Monomermischung, die aus wenigstens einem $C_2$-$C_{20}$-Alkylacrylat, vorzugsweise einem $C_2$-$C_{10}$-Alkylacrylat, das besonders bevorzugt ausgewählt ist unter Ethylacrylat, n-Butylacrylat, Isobutylacrylat und 2-Ethylhexylacrylat und wenigstens einem weiteren Monomer, das ausgewählt ist unter Methylacrylat, $C_1$-$C_4$-Alkylmethacrylaten, insbesondere Methylmethacrylat und tert.-Butylmethacrylat, vinylaromatischen Monomeren, insbesondere Styrol, Acrylnitril und Methacrylnitril, besteht.

Bei Verwendung der nach dem erfindungsgemäßen Verfahren erhältlichen Polymerisate in Klebstoffen bzw. Haftklebstoffen, beträgt der Anteil an $C_1$-$C_{20}$-Alkylacrylaten, bezogen auf die Gesamtmenge der Monomermischung M (1a) 50 bis 99 Gew.-% und insbesondere 70 bis 90 Gew.-%. Dementsprechend beträgt der Anteil der sonstigen Monomere 1 bis 50 Gew.-% und insbesondere 5 bis 30 Gew.-%.

Neben den Monomeren M(1a) enthält die Monomermischung M(1) naturgemäß noch 0,1 bis 10 Gew.-% und vorzugsweise 0,5 bis 5 Gew.-% der vorgenannten Comonomere, vorzugsweise Monomere mit einer Säuregruppe und/oder neutrale Monomere, die eine Löslichkeit in Wasser von mehr als 150 g/l aufweisen.

Die Monomermischung M(2) besteht in der Regel zu wenigstens 90 Gew.-% und insbesondere zu wenigstens 99 Gew.-% und besonders bevorzugt zu wenigstens 99,9 Gew.-% aus monoethylenisch ungesättigten, hydrophoben Monomeren, insbesondere aus solchen hydrophoben Monomeren, deren Homopolymerisate eine Glasübergangstemperatur oberhalb 20°C, vorzugsweise oberhalb 30°C und insbesondere oberhalb 50°C aufweisen. Hiezu zählen insbesondere $C_1$-$C_4$-Alkylmethacrylate wie Methylmethacrylat, tert.-Butylacrylat, vinylaromatische Monomere wie Styrol und dergleichen. Bevorzugt sind auch Mischungen, die 99 Gew.-% und insbesondere 99,9 Gew.-% wenigstens zwei voneinander verschiedener hydrophober, monoethylenisch ungesättigter Monomere umfassen, deren Homopolymerisate unterschiedliche Glasübergangstemperaturen aufweisen, wobei in der Regel die theoretische Glasübergangstemperatur der Mischung 0°C, vorzugsweise wenigstens 5°C und insbesondere wenigstens 10°C beträgt. Hierzu zählen Mischungen aus 10 bis 90 Gew.-%, speziell 20 bis 80 Gew.-% wenigstens eines hydrophoben, monoethylenisch ungesättigten Monomers mit einer korrespondierenden Glasübergangstemperatur unterhalb 10°C, speziell unterhalb -5°C, beispielsweise ein $C_2$-$C_{10}$-Alkylacrylat, und 10 bis 90 Gew.-%, speziell 20 bis 80 Gew.-% wenigstens eines hydrophoben, monoethylenisch ungesättigten Monomers mit einer korrespondierenden Glasübergangstemperatur oberhalb 20°C, speziell oberhalb 30°C und ganz speziell oberhalb 50°C, beispielsweise ein $C_1$-$C_4$-Alkylmethacrylat, tert.-Butylacrylat oder ein vinylaromatisches Monomer.

Die Herstellung des Emulsionspolymerisats der 1. Polymerisationsstufe erfolgt in an sich bekannter Weise nach der Methode einer radikalischen wässrigen Emulsionspolymerisation nach einem Monomerzulaufverfahren. Unter einem Monomerzulaufverfahren versteht man, dass man die Hauptmenge, vorzugsweise wenigstens 80 Gew.-%, insbesondere wenigstens 90 Gew.-% und besonders bevorzugt die Gesamtmenge oder nahezu die Gesamtmenge der Monomere M(1) der Polymerisationsreaktion in ihrem Verlauf zuführt. Mit anderen Worten, die Zugabe der Monomere M(1) erfolgt in der Regel über einen längeren Zeitraum, der beispielsweise 0,5 h bis 10 h oder vorzugsweise 1 h bis 5 h beträgt. Grundsätzlich sind aber auch längere oder kürzere Zugabezeiten möglich. Die Zugabe kann sowohl in Intervallen, als auch vorzugsweise kontinuierlich erfolgen, wobei die Zugaberate im Verlauf der Zugabe verändert, beispielsweise gesteigert oder abgesenkt werden kann (sog. Gradientenfahrweise). Die Zusammensetzung der Monomermischung M(1) kann hinsichtlich der Monomerbestandteile sowie sonstiger Zusätze wie Emulgatoren und gegebenenfalls Regler während ihrer Zugabe konstant gehalten oder verändert werden. Die Zugabe der Monomere M(1) kann sowohl in Form einer wässrigen Emulsion als auch in Reinform erfolgen,
wobei erstere Vorgehensweise bevorzugt ist. Bei Zugabe der Monomere M(1) in Form einer wässrigen Emulsion enthält diese in der Regel wenigstens eine oberflächenaktive Substanz, vorzugsweise wenigstens einen Emulgator zur Stabilisierung der Monomeremulsion. Die Konzentration der Monomere in dieser Emulsion liegt in der Regel im Bereich von 30 bis 90 Gew.-% und vorzugsweise im Bereich von 50 bis 80 Gew.-%.

Die Zugabe des die Polymerisation der Monomere M(1) auslösenden Initiators I(1) in der ersten Polymerisationsstufe erfolgt in an sich bekannter Weise, wobei man üblicherweise die Hauptmenge des Initiators, insbesondere wenigstens 90% der Gesamtmenge des Initiators I(1) parallel zur Zugabe der Monomere M(1) zur Polymerisationsreaktion gibt. Beginn und Ende der Initiatorzugabe müssen nicht zwingend zeitgleich mit Beginn und Ende der Zugabe der Monomere M(1) erfolgen. Häufig wird man so vorgehen, dass man eine Teilmenge des Initiators, beispielsweise 1 bis 20 Gew.-%, vorzugsweise 2 bis 10 Gew.-%, vor Beginn der Zugabe der Monomere M(1) in das Polymerisationsgefäß gibt und erst dann die Zugabe der Monomere M(1) beginnt. In der ersten Polymerisationsstufe erfolgt die Beendigung der Initiatorzugabe in der Regel nicht vor Beendigung der Monomerzugabe oder wird in der oben beschriebenen Weise auch darüber hinaus fortgesetzt. Die Geschwindigkeit der Initiatorzugabe kann im Verlauf der ersten Polymerisationsstufe geändert werden oder konstant gehalten werden. Die Geschwindigkeit der Initiatorzugabe richtet sich dabei in an sich bekannter Weise nach der Art und der Zugaberate der Monomere M(1) sowie apparativen Merkmalen des Reaktionsgefäßes. Üblicherweise erfolgt die Zugabe des Initiators in verdünnter Form, vorzugsweise in Form einer wässrigen Lösung oder Suspension, wobei die Initiatorkonzentration üblicherweise im Bereich von 1 bis 20 g/l und insbesondere 1 bis 15 g/l liegt.

Sofern die erfindungsgemäßen Polymerdispersionen als Klebstoffe bzw. in Klebstoffzubereitungen zur Anwendung kommen sollen, hat sich als vorteilhaft erwiesen, wenn man die Polymerisation der Monomermischung M(1) und gegebenenfalls der Monomermischung M(2) in Gegenwart wenigstens eines Molekulargewichtsreglers durchführt. Vorzugsweise erfolgt in der zweiten Polymerisationsstufe keine Zugabe eines Reglers. Typische Reglermengen liegen im Bereich von 0,01 bis 1 Gew.-%, insbesondere 0,02 bis 0,3 Gew.-%, bezogen auf 100 Gew.-% der insgesamt polymerisierten Monomere. Die Menge an Regler kann in allen Polymerisationsstufen die gleiche sein oder voneinander abweichen. Typische Molekulargewichtsregler sind organische Schwefelverbindungen, halogenierte Kohlenwasserstoffe, Silane, Allylalkohole und Aldehyde. Erfindungsgemäß bevorzugte Molekulargewichtsregler sind Verbindungen mit wenigstens einer Thiolgruppe wie Thioglykolsäure, Thioglykolsäureethylester, Mercaptoethanol, Mercaptopropyltrimethoxysilan, sowie lineare oder verzweigte Alkylmercaptane wie tert.-Butylmercaptan und tert.-Dodecylmercaptan. Die Zugabe des Reglers in das Polymerisationsgefäß erfolgt vorzugsweise kontinuierlich während der Polymerisation der jeweiligen Monomermischung. Vorzugsweise werden sowohl die Hauptmenge der zu polymerisierenden Monomere als auch die Hauptmenge des Molekulargewichtsreglers kontinuierlich der Polymerisationsreakion zugeführt. Vorzugsweise führt man den Molekulargewichtsregler als separate, vorzugsweise wässrige Lösung oder gemeinsam mit den Monomeren, z.B. in einer wässrigen Monomeremulsion kontinuierlich der Polymerisationsreaktion zu.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,1 bis 5 Gew.-% und insbesondere 0,5 bis 4 Gew.-%, bezogen auf die in der ersten Stufe zu polymerisierenden Monomere M(1) eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Bevorzugt wird wenigstens ein anionischer Emulgator, gegebenenfalls in Kombination mit einem nichtionischen Emulgator verwendet.

Zu den anionischen Emulgatoren zählen Alkali- und Ammoniumsalze von Alkylsulfaten (Alkylrest: $C_8$-$C_{12}$), von Dialkylestern der Sulfobernsteinsäure (Alkylrest: $C_4$-$C_{10}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_{10}$), von Al-

kylsulfonsäuren (Alkylrest: $C_{12}$-$C_{18}$) und von Alkylarylsulfonsäuren (Alkylrest: $C_9$ bis $C_{18}$). Zu den anionischen grenzflächenaktiven Substanzen zählen auch Mono- und Dialkylderivate von Sulfonylphenoxybenzolsulfonsäure-Salzen, insbesondere von deren Natrium-, Kalium- oder Calciumsalze. Die Alkylgruppen in diesen Verbindungen weisen in der Regel 6 bis 18 und insbesondere 6, 12 oder 16 C-Atome auf. Häufig werden technische Gemische verwendet, die einen Anteil von 50 bis 90 Gew.-% des monoalkylierten Produktes aufweisen. Diese Verbindungen sind allgemein bekannt, z.B. aus der US-A-4,269,749, und im Handel erhältlich, beispielsweise als Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxylierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Im Hinblick auf die Verwendung der nach dem erfindungsgemäßen Verfahren hergestellten Polymerdispersionen in Klebstoffen und in Dispersionsfarben umfassen die für die Herstellung der erfindungsgemäßen Polymerdispersionen verwendeten oberflächenaktiven Substanzen vorzugsweise wenigstens einen anionischen Emulgator. Für die Stabilität der erfindungsgemäßen Polymerdispersionen, insbesondere gegenüber mechanischen Belastungen wie Scherkräften, hat es sich als vorteilhaft erwiesen, wenn die zur Herstellung der erfindungsgemäßen Dispersionen bevorzugt eingesetzten anionischen Emulgatoren wenigstens ein Salz eines Dialkylesters der Sulfobernsteinsäure (linearer oder verzweigter $C_4$-$C_{10}$- und insbesondere $C_8$-Alkylrest), vorzugsweise ein Alkalimetallsalz und insbesondere das Natriumsalz umfassen.

Das Polymerisationsmedium kann sowohl nur aus Wasser, als auch aus Mischungen aus Wasser und damit mischbaren organischen Flüssigkeiten wie Methanol, Ethanol, n-Propanol, iso-Propanol, n-Butanol, tert.-Butanol, Tetrahydrofuran, Formamid, Dimethylformamid, bestehen, wobei der Anteil dieser Flüssigkeiten, bezogen auf das Polymerisationsmedium üblicherweise nicht mehr als 10 Gew.-%, insbesondere nicht mehr als 5 Gew.-% und speziell nicht mehr als 1 Gew.-% ausmacht. Vorzugsweise wird nur Wasser als Polymerisationsmedium verwendet.

Im Hinblick auf die Verwendung der nach dem erfindungsgemäßen Verfahren erhältlichen Polymerisate hat es sich als vorteilhaft erwiesen, wenn die Polymerteilchen einen mittleren Teilchendurchmesser im Bereich von 50 bis 1000 nm aufweisen (bestimmt mittels Ultrazentrifuge oder durch Photonenkorrelationsspektroskopie; zur Teilchengrößenbestimmung siehe W. Mächtle, Angew. Makromolekulare Chemie 1984, Bd. 185, 1025-1039, W. Mächtle ebenda, 1988, Bd. 162, 35-42). Bei Zubereitungen, mit hohen Feststoffgehalten, z.B. > 50 Gew.-%, bezogen auf das Gesamtgewicht der Zubereitung, ist es aus Gründen der Viskosität von Vorteil, wenn der gewichtsmittlere Teilchendurchmesser der Polymerteilchen in der Dispersion ≥ 100 nm ist. Der mittlere Teilchendurchmesser wird vorzugsweise 800 nm nicht überschreiten. Ferner hat es sich als günstig erwiesen, wenn die Teilchendurchmesser der individuellen Polymerteilchen über einen großen Bereich variieren, insbesondere die Größenverteilung zwei oder mehrere Maxima aufweist (Polymerdispersionen mit bi- oder polymodaler Polymerteilchengrößenverteilung). Maßnahmen zur Einstellung der Polymerteilchengrößenverteilung sind dem Fachmann bekannt (siehe beispielsweise EP-A 614 922 und dort genannte Druckschriften).

Neben der saatfreien Herstellungsweise kann zur Einstellung einer definierten Polymerteilchengröße die Emulsionspolymerisation der 1. Polymerisationsstufe nach dem Saatlatex-Verfahren oder in Gegenwart von in situ hergestelltem Saatlatex erfolgen. Verfahren hierzu sind bekannt und können dem Stand der Technik entnommen werden (siehe EP-B 40 419, EP-A-614 922, EP-A-567 812 und dort zitierte Literatur sowie 'Encyclopedia of Polymer Science and Technology', Vol. 5, John Wiley & Sons Inc., New York 1966, S. 847).

Bei dem Saatlatex-Verfahren wird die 1. Polymerisationsstufe üblicherweise in Anwesenheit von 0,001 bis 3 Gew.-% und insbesondere 0,01 bis 1 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 200 nm und insbesondere 20 bis 200 nm auf. Seine konstituierenden Monomere sind in der Regel Monomere M(2), beispielsweise Styrol, Methylmethacrylat, n-Butylacrylat und Mischungen davon, wobei der Saatlatex in untergeordnetem Maße auch Monomere M(1) und/oder M(3), vorzugsweise weniger als 10 Gew.-%, bezogen auf das Gesamtgewicht der Polymerisatteilchen im Saatlatex, einpolymerisiert enthalten kann.

Zur Entfernung der Restmonomere wird üblicherweise im Anschluss an die letzte Polymerisationsstufe eine Desodorierung auf physikalischem Wege, z.B. durch Abdestillieren der flüchtigen Monomere mit Wasserdampf, oder auf chemischem Wege durchgeführt. Bei der chemischen Desodorierung wird nach Ende der eigentlichen Emulsionspolymerisation, d.h. nach einem Umsatz der Monomeren M(2) bzw. M(i) von mindestens 95 %, weiterer Initiator, z.B. ein Redoxinitiator zugesetzt. Vorzugsweise erfolgt die Desodorierung frühestens 10 min. und speziell frühestens 20 min. nach Beendigung der Zugabe von M(2) bzw. M(i) der letzten Polymerisationsstufe. Zur chemischen Desodorierung geeignete Redoxinitiatoren umfassen als oxidierende Komponente beispeilsweise wenigstens ein organisches Peroxid und/oder Hydroperoxid wie tert.-Butylperoxid, Cumolhydroperoxid, Pinanhydroperoxid, Diisopropylphenylhydroperoxid, Dibenzoylperoxid, Dilauroylperoxid und Diacetylperoxid und als reduzierend wirkende Komponente beispielsweise Alkalimetallsulfite, Ascorbinsäure, Acetonbisulfit-Addukt und/oder ein Alkalimetallsalz der Hydroxymethansulfinsäure. Gegebenenfalls kann gleichzeitig mit oder im Anschluss an die chemische Desodorierung eine physikalische Desodorierung erfolgen. Ebenfalls ist es möglich, zunächst die physikalische und anschliessend die chemische Desodorierung durchzuführen.

Der Feststoffgehalt der nach dem erfindungsgemäßen Verfahren erhaltenen Polymerdispersionen beträgt in der Regel wenigstens 30 Gew.-%, vorzugsweise wenigstens 40 Gew.-% und insbesondere wenigstens 50 Gew.-%. Er kann bis zu 75 Gew.-% betragen und liegt besonders bevorzugt im Bereich von 50 bis 65 Gew.-%.

Die nach dem erfindungsgemäßen Verfahren erhältlichen Polymerdispersionen sind insbesondere als Klebstoffe sowie als Klebstoffkomponente, d.h. als Klebrohstoff, für Klebstoffzubereitungen, insbesondere für wässrige Klebstoffzubereitungen geeignet. So zeichnen sich die erfindungsgemäßen Polymerdispersionen durch ein ausgewogenes Verhältnis von Haftung des Klebstoffs auf dem zu verklebenden Substrat und innerer Festigkeit des Klebefilms aus. Dieses Eigenschaftsprofile macht die erfindungsgemäßen Polymerdispersionen besonders geeignet als Haftklebstoffe bzw. als Klebrohstoffe für Haftkleber. Demnach betrifft die vorliegende Erfindung auch die Verwendung der erfindungsgemäßen wässrigen Polymerdispersionen als Klebstoffe und Klebrohstoffe, insbesondere als Haftklebstoffe.

Die erfindungsgemäßen Polymerisatdispersionen können als solche oder nach Konfektionierung mit üblichen Hilfsstoffen eingesetzt werden. Übliche Hilfsstoffe sind beispielsweise Netzmittel, Verdicker, Entschäumer, Weichmacher, Pigmente, Füllstoffe, Schutzkolloide, Lichtschutzstabilisatoren und Biozide.

Bei Verwendung als Haftklebstoffe können den erfindungsgemäßen Polymerdispersionen als Hilfsstoffe auch Tackifier, d.h. klebrigmachende Harze zugesetzt werden. Tackifier sind beispielsweise aus Adhesive Age July 1987, S. 19-23, oder Polym. mater. Sci. Eng. 61, 1989, S. 588 bis 592 bekannt. Beispiele für Tackifier sind Kollophoniumharze und ihre Derivate. Die Kollophoniumharze können beispielsweise in ihrer Salzform oder vorzugsweise in veresterter Form eingesetzt werden. Weitere Beispiele für Tackifier sind Kohlenwasserstoffharze, z.B. Cumaronharze, Polyterpenharze, Indenharze sowie Kohlenwasserstoffharze auf Basis von ungesättigten Kohlenwasserstoffen wie Butadien, Penten, Methylbuten, Isopren, Piperylen, Divinylmethan, Cyclopenten, Cyclopentadien, Cyclohexen, Cyclohexadien, Styrol oder Vinyltoluol. Geeignete Takkifier sind auch niedermolekulare Polymere von Alkylestern der Acrylsäure und/oder der Methacrylsäure, die in der Regel ein gewichtsmittleres Molukargewicht unterhalb 30000 aufweisen und zu wenigstens 60 Gew.-%, insbesondere wenigstens 80 Gew.-% Alkyl(meth)acrylaten aufgebaut sind. Bevorzugte Tackifier sind natürliche oder chemisch modifizierte Kollophoniumharze. Sie bestehen überwiegend aus Abietinsäure oder deren Derivaten.

Sofern erwünscht, werden die Tackifier in Mengen bis 100 Gew.-%, vorzugsweise 5 bis 50 Gew.-% bezogen auf das erfindungsgemäße Stufenpolymer in der Klebstoffzubereitung eingesetzt. Die erfindungsgemäßen Dispersionen zeichnen sich dadurch aus, daß sie auch ohne Tackifier eingesetzt werden können.

Die erfindungsgemäßen Polymerisatdispersionen können auch nach bekannten Verfahren des Standes der Technik zu Polymerpulvern getrocknet werden.

Die Haftklebstoffzubereitungen können durch übliche Methoden, z.B. durch Rollen, Rakeln, Streichen etc auf Substrate aufgebracht werden. Das in der Klebstoffzubereitung enthaltene Wasser kann durch Trocknung bei Umgebungstemperatur oder erhöhter Temperatur z.B. im Bereich von 50 bis 150 °C entfernt werden. Als Substrate eignen sich neben Papier und Karton auch Polymerfolien, insbesondere aus Polyethylen, orientiertem Polypropylen, Polyamid, das biaxial oder monoaxial verstreckt sein kann, Polyethylenterephthalat, Polyamid, Polystyrol, Polyvinylchlorid, Polyacetat, Zellglas, mit Metall (z.B. Aluminium beschichtete (bedampfte) Polymerfolien (kurz: metallisierte Folien) und Metallfolien, z.B. aus Aluminium. Die genannten Folien können auch z.B. mit Druckfarben bedruckt sein. Zur späteren Verwendung kann die mit dem Haftklebstoff beschichtete Seite des Substrats, z.B. von Etiketten, mit einem Releasepapier, z.B. mit silikonisiertem Papier abgedeckt werden.

Die folgenden Beispiele sollen die Erfindung verdeutlichen.

I. Herstellung der Polymerdispersionen (Beispiele 1 und 2, Vergleichsbeispiele V1 und V2).

Beispiel 1

In einem Polymerisationsreaktor wurden 150 g entionisiertes Wasser und 1,7 g eines 33 gew.-%igen wässrigen Saatlatex (mittlere Teilchengröße $d_{50}$ 30 nm) unter Stickstoffatmosphäre vorgelegt. Man erwärmte die Vorlage auf 95°C und gab dann unter Beibehaltung der Temperatur 4 g der Initiatorlösung in die Vorlage. Nach 5 min gab man zeitgleich beginnend über einen Zeitraum von 3 h den Monomerzulauf und die Restmenge der Initiatorlösung mit konstanter Zulaufgeschwindigkeit. Nach Beendigung der Monomer- und Initiatorzugabe behielt man die Temperatur weitere 15 min bei, gab dann innerhalb von 15 min 28 g Styrol zu und ließ weitere 30 min bei 95°C rühren. Dann gab man, zeitgleich beginnend, innerhalb von 30 min 16,8 g einer 10 gew.-%igen wässrigen Lösung von tert.-Butylhydroperoxid und 14,9 g einer 12 gew.-%igen Lösung von Aceton-Bisulfit-Addukt in das Polymerisationsgefäß. Danach gab man sukzessive 19,6 g einer 10 gew.-%igen Natronlauge und 7,84 g einer 50 Gew.-%igen Lösung des Natriumsalzes des Dioctylesters der Sulfobernsteinsäure zu. Anschließend kühlte man auf Raumtemperatur.

Der Feststoffgehalt der so erhaltenen Dispersion lag bei 54,3 Gew.-%. Der pH-Wert betrug 7,4. Eine 0,01 gew.-%ige Probe der Dispersion wies eine Lichtdurchlässigkeit von 50 % auf (photometrisch bestimmt an einer 0,01 gew.-%igen Probe der Dispersion gegen Wasser mit weißem Licht).

Monomerzulauf: wässrige Emulsion aus

207,9 g entionisiertem Wasser,
12,4 g Emulgatorlösung 1,
3,7 g Emulgatorlösung 2,
0,3 g tert.-Dodecylmercaptan,
5,0 g Acrylsäure,
289,0 g n-Butylacrylat,
170,8 g 2-Ethylhexylacrylat,
67,2 g Methylmethacrylat.

Initiatorlösung: 40 g einer 7 gew.-%igen wässrigen Lösung von Natriumperoxodisulfat.

Emulgatorlösung 1: 45 gew.-%ige, wässrige Lösung des Natriumsalzes einer Mischung von Mono- und Bisdodecyl-Diphenyletherdisulfonsäure (Dowfax 2A1 der Dow-Chemical) Emulgatorlösung 2: 30 gew.-%ige wässrige Lösung des Natriumsalzes des Schwefelsäurehalbesters eines ethoxylierten C12-Alkanols (Ethoxilierungsgrad von etwa 30).

Vergleichsbeispiel V1

In einem Polymerisationsreaktor wurden 150 g entionisiertes Wasser und 1,7 g eines 33 gew.-%igen wässrigen Saatlatex (mittlere Teilchengröße $d_{50}$ 30 nm) unter Stickstoffatmosphäre vorgelegt. Man erwärmte die Vorlage auf 95°C und gab dann unter Beibehaltung der Temperatur 4 g der Initiatorlösung in die Vorlage. Nach 5 min gab man zeitgleich beginnend über einen Zeitraum von 3 h den Monomerzulauf und die Restmenge der Initiatorlösung mit konstanter Zulaufgeschwindigkeit. Nach Beendigung der Monomerzugabe behielt man die Temperatur 30 min bei und gab dann zeitgleich beginnend innerhalb von 30 min unter Beibehaltung der Temperatur 16,8 g einer 10 gew.-%igen wässrigen Lösung von tert.-Butylhydroperoxid und 14,9 g einer 12 gew.-%igen wässrigen Lösung von Aceton-Bisulfit-Addukt zu. Unmittelbar hiernach gab man 19,6 g einer 10 gew.-%igen Natronlauge und 7,8 g einer 50 gew.-%igen Lösung des Natriumsalzes des Dioctylesters der Sulfobernsteinsäure zu und kühlte auf Raumtemperatur.

Der Feststoffgehalt der so erhaltenen Dispersion lag bei 55,3 Gew.-%. Der pH-Wert betrug 7,1. Eine 0,01 gew.-%ige Probe der Dispersion wies eine Lichtdurchlässigkeit von 50 % auf (photometrisch bestimmt an einer 0,01 gew.-%igen Probe der Dispersion gegen Wasser mit weißem Licht).

Monomerzulauf: wässrige Emulsion aus

207,9 g entionisiertem Wasser,
12,4 g Emulgatorlösung 1,
3,7 g Emulgatorlösung 2,
0,3 g tert.-Dodecylmercaptan,
5,0 g Acrylsäure,
289,0 g n-Butylacrylat,
170,8 g 2-Ethylhexylacrylat,
67,2 g Methylmethacrylat.

Initiatorlösung: 40 g einer 7 gew.-%igen, wässrigen Lösung von Natriumperoxodisulfat.

Beispiel 2

In einem Polymerisationsreaktor wurden 270 g entionisiertes Wasser und 1,8 g eines 33 gew.-%igen wässrigen Saatlatex (wie in Beispiel 1) (mittlere Teilchengröße $d_{50}$ 30 nm) vorgelegt. Man erwärmte auf 85°C und gab dann innerhalb von 2 min 9,4 g der Initiatorlösung zu. Nach weiteren 2 min gab man zeitgleich beginnend über einen Zeitraum von 240 min den Monomerzulauf und die Restmenge der Initiatorlösung unter Beibehaltung der 85°C in das Polymerisationsgefäß. Nach Beendigung der Monomer- und Initiatorzugabe behielt man die 85°C 15 min bei, gab dann bei 85°C in einer Portion 75 g Methylmethacrylat zu, ließ weitere 30 min bei 85°C rühren und gab unmittelbar im Anschluß daran innerhalb von 60 min 55 g entionisiertes Wasser und 5 g einer 10 gew.-%igen Natronlauge zu. Unmittelbar im Anschluß daran gab man zeitgleich beginnend 22,5 g einer 10 gew.-%igen wässrigen tert.-Butylhydroperoxid-Lösung und 18,0 g einer 10 gew.-%igen Lösung des Natriumsalzes der Hydroxymethansulfinsäure innerhalb von 60 min bei 85°C in das Polymerisationsgefäß. Danach kühlte man auf Raumtemperatur ab.

Der Feststoffgehalt der so erhaltenen Dispersion lag bei 60,5 Gew.-%. Der pH-Wert betrug 7,8. Eine 0,01 gew.-%ige Probe der Dispersion wies eine Lichtdurchlässigkeit von 43 % auf (photometrisch bestimmt an einer 0,01 gew.-%igen Probe der Dispersion gegen Wasser mit weißem Licht).

Monomerzulauf: wässrige Emulsion aus

325 g entionisiertem Wasser,
96,3 g Emulgatorlösung 3,
75,0 g Emulgatorlösung 4,
14,4 g Acrylsäure,
180,5 g Methylmethacrylat,
29,7 g Styrol,
1265,0 g 2-Ethylhexylacrylat.

Initiatorlösung: 8,4 g Natriumperoxodisulfat in 111,6 g entionisiertem Wasser.

Emulgatorlösung 3: 31 gew.-%ige wässrige Lösung eines anionischen Emulgators (Emulphor®NPS der BASF AG) Emulgatorlösung 4: 20 gew.-%ige wässrige Lösung eines anionischen Emulgators (Emulgator 825 BASF AG)

Vergleichsbeispiel V2a

In einem Polymerisationsreaktor wurden 150 g entionisiertes Wasser und 1,7 g eines 33 gew.-%igen wässrigen Saatlatex (mittlere Teilchengröße $d_{50}$ 30 nm) unter Stickstoffatmosphäre vorgelegt. Man erwärmte die Vorlage auf 95°C und gab dann unter Beibehaltung der Temperatur 4 g der Initiatorlösung in die Vorlage. Nach 5 min gab man zeitgleich beginnend über einen Zeitraum von 3 h den Monomerzulauf und die Restmenge der Initiatorlösung mit konstanter Zulaufgeschwindigkeit. Nach Beendigung der Monomer- und Initiatorzugabe gab man innerhalb von 60 min bei 85°C 55 g entionisiertes Wasser und 61,5 g einer 10 gew.-%igen Natronlauge zu. Unmittelbar im Anschluß daran gab man zeitgleich beginnend über einen Zeitraum von 60 min bei 85°C 22,5 g einer 10 gew.-%igen wässrigen tert.-Butylhydroperoxid-Lösung und 18,0 g einer 10 gew.-%igen Lösung des Natriumsalzes der Hydroxymethansulfinsäure zu. Danach kühlte man auf Raumtemperatur ab.

Der Feststoffgehalt der so erhaltenen wässrigen Polymerisatdispersion lag bei 61,5 Gew.-%. Der pH-Wert betrug 7,9. Eine 0,01 gew.-%ige Probe der Dispersion wies eine Lichtdurchlässigkeit von 42 % auf (photometrisch bestimmt an einer 0,01 gew.-%igen Probe der Dispersion gegen Wasser mit weißem Licht). Die mittlere Teilchengröße der Polymerisatteilchen (bestimmt mittels Photonenkorrelationsspektroskopie) betrug 340 nm.

Monomerzulauf: wässrige Emulsion aus

325 g entionisiertem Wasser,
96,3 g Emulgatorlösung 3,
75,0 g Emulgatorlösung 4,
14,4 g Acrylsäure,
180,5 g Methylmethacrylat,
29,7 g Styrol,
1265,0 g 2-Ethylhexylacrylat.

Initiatorlösung: 8,4 g Natriumperoxodisulfat in 111,6 g entionisiertem Wasser.

Vergleichsbeispiel V2b

Die Durchführung der Polymerisation erfolgte analog Vergleichsbeispiel V2a, wobei abweichend der Monomerzulauf die folgende Zusammensetzung aufwies:

wässrige Emulsion aus
325 g entionisiertem Wasser,
96,3 g Emulgatorlösung 3,
75,0 g Emulgatorlösung 4,
14,4 g Acrylsäure,

255,5 g Methylmethacrylat,
29,7 g Styrol,
1265,0 g 2-Ethylhexylacrylat.

Beispiel 3

Die Durchführung der Polymerisation erfolgte analog Beispiel 2, wobei anstelle von 75 g Methylmethacrylat in der 2. Polymerisationsstufe eine Mischung aus 37.5 g Methylmethacrylat und 37.5 g 2-Ethylhexylacrylat zugegeben wurde.

Der Feststoffgehalt der so erhaltenen Dispersion lag bei 60,5 Gew.-%. Der pH-Wert betrug 7,8. Eine 0,01 gew.-%ige Probe der Dispersion wies eine Lichtdurchlässigkeit von 46 % auf (photometrisch bestimmt an einer 0,01 gew.-%igen Probe der Dispersion gegen Wasser mit weißem Licht).

II. Anwendungstechnische Prüfung

II.1 Prüfmethoden:

a) Herstellung der Prüfstreifen
Die zu prüfende Dispersion wird ohne Zusatz von Tackifiern untersucht. Die Mischung wird mit einem Rakel in dünner Schicht auf ein silikonisiertes Papier aufgetragen und 3 min bei 90°C getrocknet. Die Spalthöhe der Rakel wird dabei so gewählt, dass sich für den getrockneten Klebstoff eine Auftragsmenge von 18 bis 22 g/m$^2$ ergibt.
Auf den getrockneten Klebstoff wird handelsübliche Polypropylen-Folie (OPP-Folie; Stärke 30 $\mu$m, Corona vorbehandelt) aufgelegt und mit einem Handroller fest angerollt. Das so hergestellte Folienlaminat wird in Streifen von 2,5 cm Breite geschnitten. Diese Streifen werden vor der Prüfung mindestens 24 h im Normklima gelagert.
b) Prüfung der Schälfestigkeit (in Anlehnung an FINAT FTM 1)
Nach Abziehen des silikonisierten Papiers wird ein 2,5 cm breiter Prüfstreifen auf ein Prüfblech aus Afera sowie auf ein Prüfstück aus Polyethylen geklebt. Umgebungsbedingungen: 23°C, 50 % relative Luftfeuchtigkeit. 1 Minute nach der Verklebung wird der Streifen mit Hilfe einer Zugprüfmaschine in einem Winkel von 180° mit einer Geschwindigkeit von 300 mm/min abgezogen. Als Schälfestigkeit wird die dafür im Mittel erforderliche Kraft in N/2,5 cm als Mittelwert aus den Ergebnissen von drei Prüfkörpern angegeben.
c) Prüfung der Kohäsion (Scherfestigkeit in Anlehnung an FINAT FTM 7)
Nach Abziehen des silikonisierten Papiers wird der Prüfstreifen so auf den Rand eines Prüfblechs aus Afera verklebt, dass sich eine Verklebungsfläche von 6,25 cm$^2$ ergibt. 10 Minuten nach dem Verkleben wird am überstehenden Ende der Folie ein 1000 g-Gewicht befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluss des Gewichts als Mittelwert aus den Ergebnissen von drei Prüfkörpern in Stunden angegeben.

Tabelle

| Beispiel | Schälfestigkeit 300 mm/min [N/2,5 cm] | | | | | | Kohäsion [h] | |
|---|---|---|---|---|---|---|---|---|
| | Afera | | Polyethylen | | | | Afera | |
| | sofort | BB | sofort | BB | 24 h | BB | | BB |
| 1 | 4,2 | A | 4,5 | A | 2,7 | A | 50 | K |
| V1 | 4,2 | A | 4,1 | F | 2,8 | F | 11 | K |
| 2 | 7,1 | A | 5,1 | A | 7,7 | A | 105 | F/R |
| V2a | 6,0 | A | 4,9 | F | 7,3 | F | 55 | F/K |
| V2b | 6,1 | A | 5,0 | F | 6,2 | F | 110 | F/K |
| 3 | 6,9 | A | 5.2 | A | 8.5 | A | 92 | K |
| BB: Bruchbild A: adhäsiver Bruch K: Kohäsionsbruch F: klebfreier Film auf Substrat | | | | | | | | |

(fortgesetzt)

R: punktuelle Rückstände

## Patentansprüche

1. Verfahren zur Herstellung wässriger Polymerdispersionen durch eine wenigstens 2-stufige radikalische wässrige Emulsionspolymerisation ethylenisch ungesättigter Monomere, umfassend:

   1. eine erste Polymerisationsstufe 1, bei der man eine erste Monomerzusammensetzung M(1) nach einem Monomerzulaufverfahren durch Zugabe eines die radikalische Polymerisation auslösenden Initiators I(1) polymerisiert, wobei man eine wässrige Dispersion eines Polymerisats P(1) erhält, und
   2. eine weitere Polymerisationsstufe 2, bei der man

      2a. eine Monomerzusammensetzung M(2), die eine andere Monomerzusammensetzung als die Monomerzusammensetzung M(1) aufweist, in unverdünnter Form zu der wässrigen Dispersion des Polymeren P(1) gibt, und
      2b. die Monomerzusammensetzung M(2) polymerisiert und

   3. gegebenenfalls zur Durchführung weiterer Polymerisationsstufen i die Schritte 2a und 2b wiederholt,

   wobei die Gesamtmenge der Monomere M(2) 0,1 bis 20 Gew.-% der in Stufe 1 polymerisierten Monomere M(1) ausmacht und die Zugabe der Monomermischung M(2) nicht vor Beendigung der Zugabe der Monomermischung M(1) erfolgt, **dadurch gekennzeichnet, daß** die Polymerisation in der Polymerisationsstufe 2 und den gegebenenfalls weiteren Polymerisationsstufen in Gegenwart von Restmengen des in der 1. Stufe zugegebenen Initiators I(1) oder durch Zugabe von weiterem Initiator I(1) erfolgt und von Beginn des Schritts 1 bis zur Beendigung des Schritts 2b in der letzten Polymerisationsstufe die Temperatur im Reaktionsgefäß wenigstens 70°C beträgt.

2. Verfahren nach Anspruch 1, **dadurch gekennzeichnet, daß** das Zeitintervall zwischen dem Zeitpunkt der Beendigung der Zugabe der Monomere M(1) bzw. der Beendigung der Initiatorzugabe I(1) und dem Beginn der Zugabe der Monomere M(2) wenigstens 5 min beträgt.

3. Verfahren nach Anspruch 1 oder 2, **dadurch gekennzeichnet, daß** die Zugabe des Initiators I(1) nicht vor Beendigung der Zugabe der Monomere M(1) endet.

4. Verfahren nach einem der vorhergehenden Ansprüche, **dadurch gekennzeichnet, dass** die Monomere M(1) 90 bis 99,9 Gew.-% einer Monomermischung enthalten, die aus

   - wenigstens einem $C_2$-$C_{20}$-Alkylacrylat und
   - wenigstens einem weiteren Monomeren, ausgewählt unter Methylacrylat, $C_1$-$C_4$-Alkylmethacrylaten, vinylaromatischen Monomeren, Acrylnitril und Methacrylnitril, besteht.

5. Verfahren nach einem der vorhergehenden Ansprüche, **dadurch gekennzeichnet, dass** die in der 2. und gegebenenfalls den weiteren Polymerisationsstufen eingesetzten Monomere M(2) bzw. M(i) weniger als 0,1 Gew.-% Monomere mit Säuregruppen, bezogen auf die jeweils eingesetzte Menge an M(2) bwz. M(i) enthalten.

6. Verfahren nach einem der vorhergehenden Ansprüche, **dadurch gekennzeichnet, dass** die in der 2. und gegebenenfalls den weiteren Polymerisationsstufen eingesetzten Monomere M(2) bzw. M(i) keine oder weniger als 0,01 Gew.-% mehrfach ethylenisch ungesättigte Monomere enthalten.

7. Verfahren nach einem der vorhergehenden Ansprüche, **dadurch gekennzeichnet, dass** die in der 2. und gegebenenfalls den weiteren Polymerisationsstufen eingesetzten Monomere M(2) bzw. M(i) auschließlich monoethylenisch ungesättigte hydrophobe Monomere mit einer Wasserlöslichkeit unterhalb 30 g/l bei 25°C (1 bar) umfassen.

8. Verfahren nach einem der vorhergehenden Ansprüche, **dadurch gekennzeichnet, dass** die Monomere M(1) 0,1 bis 5 Gew.-%, bezogen auf die Menge an Monomeren M(1), wenigstens ein Monomer mit wenigstens einer Säuregruppe enthalten.

**9.** Verfahren nach einem der vorhergehenden Ansprüche, **dadurch gekennzeichnet, dass** die Gesamtmenge aller Monomeren M(2) und gegebenenfalls M(i) 1 bis 10 Gew.-%, bezogen auf die Monomere M(1) beträgt.

**10.** Verfahren nach einem der vorhergehenden Ansprüche, **dadurch gekennzeichnet, dass** das Polymerisat P(1) der ersten Polymerisationsstufe eine Glasüberganstemperatur $Tg^1$ aufweist und die in der 2. bzw. i-ten Polymerisationsstufe polymerisierte Monomermischung M(2) bzw. M(i) einem Polymerisat P(2) bwz. P(i) mit einer theoretischen Glasübergangstemperatur $Tg^2$ bzw. $Tg^i$ (berechnet nach Fox) entspricht, die um wenigstens 10 K größer ist als $Tg^1$.

**11.** Verfahren nach Anspruch 10, **dadurch gekennzeichnet, dass** die Differenz der Glasübergangstemperaturen $Tg^2-Tg^1$, bzw. $T_g^i-T_g^1$, wenigstens 40 K beträgt.

**12.** Verfahren nach einem der vorhergehenden Ansprüche, **dadurch gekennzeichnet, dass** die in Schritt 1 eingesetzte Monomermischung M(1) einem Polymerisat P(1) mit einer theoretischen Glasübergangstemperatur $T_g^1$ (berechnet nach Fox) von nicht mehr als 0 °C entspricht.

**13.** Wässrige Polymerdispersion erhältlich nach einem Verfahren der Ansprüche 1 bis 12.

**14.** Polymerpulver, erhältlich durch Verdampfen der flüchtigen Bestandteile der wässrigen Polymerdispersion aus Anspruch 13.

**15.** Verwendung wässriger Polymerdispersionen, erhältlich nach einem Verfahren gemäß Anspruch 12, oder eines durch Verdampfen der flüchtigen Bestandteile aus der Polymerdispersion erhaltenen Polymerpulvers zur Herstellung von Haftklebstoffen.

**Claims**

**1.** A process for preparing aqueous polymer dispersions by at least two-stage free-radical aqueous emulsion polymerization of ethylenically unsaturated monomers, comprising:

  1. a first polymerization stage, 1, in which a first monomer composition M(1) is polymerized in accordance with a monomer feed technique by adding a free-radical polymerization initiator I(1), giving an aqueous dispersion of a polymer P(1), and
  2. a further polymerization stage, 2, in which

    2a. a monomer composition M(2) whose makeup is different than that of the monomer composition M(1) is added in undiluted form to the aqueous dispersion of the polymer P(1), and
    2b. the monomer composition M(2) is polymerized, and

  3. if desired, steps 2a and 2b are repeated to carry out further polymerization stages, i,
  the total amounts of the monomers M(2) making up from 0.1 to 20% by weight of the monomers M(1) polymerized in stage 1 and the addition of the monomer mixture M(2) not taking place before the end of the addition of the monomer mixture M(1), wherein the polymerization in polymerization stage 2 and any further polymerization stages takes place in the presence of residual amounts of the initiator I(1) added in the 1st stage or by adding further initiator I(1) and from the beginning of step 1 to the end of step 2b in the last polymerization stage the temperature in the reaction vessel is at least 70°C.

**2.** The process according to claim 1, wherein the time interval between the time of the ending of the addition of the monomers M(1) and/or the ending of the addition of initiator I(1) and the beginning of the addition of the monomers M(2) is at least 5 min.

**3.** The process according to claim 1 or 2, wherein the addition of the initiator I(1) is not ended before the end of the addition of the monomers M(1).

**4.** The process according to any of the preceding claims, wherein the monomers M(1) comprise from 90 to 99.9% by weight of a monomer mixture composed of

  - at least one $C_2$-$C_{20}$ alkyl acrylate and

- at least one further monomer selected from methyl acrylate, $C_1$-$C_4$-alkyl methacrylates, vinylaromatic monomers, acrylonitrile, and methacrylonitrile.

5. The process according to any of the preceding claims, wherein the monomers M(2) and, where appropriate, M(i) used in the 2nd and any further polymerization stages comprise less than 0.1% by weight of monomers containing acid groups, based on the amount of M(2) and, where appropriate, M(i) used in each case.

6. The process according to any of the preceding claims, wherein the monomers M(2) and, where appropriate, M(i) used in the 2nd and any further polymerization stages comprise none or less than 0.01% by weight of polyethylenically unsaturated monomers.

7. The process according to any of the preceding claims, wherein the monomers M(2) and, where appropriate, M(i) used in the 2nd and any further polymerization stages comprise exclusively monoethylenically unsaturated hydrophobic monomers having a water solubility of less than 30 g/l at 25°C (1 bar).

8. The process according to any of the preceding claims, wherein the monomers M(1) comprise from 0.1 to 5% by weight, based on the amount of monomers M(1), and at least one monomer containing at least one acid group.

9. The process according to any of the preceding claims, wherein the total amount of all monomers M(2) and, where appropriate, M(i) is from 1 to 10% by weight, based on the monomers M(1).

10. The process according to any of the preceding claims, wherein the polymer P(1) of the first polymerization stage has a glass transition temperature $T_g^1$ and the monomer mixture M(2) and, where appropriate, M(i) polymerized in the 2nd and, where appropriate, i-th polymerization stage corresponds to a polymer P(2) and, where appropriate, P(i) having a theoretical glass transition temperature $T_g^2$ and, where appropriate, $T_g^1$ (calculated by the method of Fox) which is greater by at least 10K than $T_g^1$.

11. The process according to claim 10, wherein the difference between the glass transition temperatures, $T_g^2$-$T_g^1$, or where appropriate $T_g^1$-$T_g^1$, is at least 40 K.

12. The process according to any of the preceding claims, wherein the monomer mixture M(1) used in step 1 corresponds to a polymer P(1) having a theoretical glass transition temperature $T_g^1$ (calculated by the method of Fox) of not more than 0°C.

13. An aqueous polymer dispersion obtainable by a process of any of claims 1 to 12.

14. A polymer powder obtainable by evaporating the volatile constituents from the aqueous polymer dispersion of claim 13.

15. The use of aqueous polymer dispersions obtainable by a process according to claim 12, or of a polymer powder obtained by evaporating the volatile constituents from the polymer dispersion, for producing pressure sensitive adhesives.

**Revendications**

1. Procédé pour la préparation de dispersions aqueuses de polymères par une polymérisation en émulsion aqueuse radicalaire, en au moins deux étapes, de monomères à insaturation éthylénique, comprenant :

   1. une première étape de polymérisation 1, dans laquelle on polymérise une première composition de monomères M(1) selon un procédé d'alimentation en monomères, par addition d'un amorceur I(1) déclenchant la polymérisation radicalaire, de sorte qu'on obtient une dispersion aqueuse d'un produit de polymérisation P(1), et
   2. une autre étape de polymérisation 2, dans laquelle

      2a. on ajoute sous forme diluée à la dispersion aqueuse du polymère P(1) une composition de monomères M(2), qui présente une autre composition en monomères que la composition de monomères M(1), et
      2b. on polymérise la composition de monomères M(2) et

3. éventuellement on répète les étapes 2a et 2b pour l'exécution d'autres étapes de polymérisation i,

la quantité totale des monomères M(2) représentant de 0,1 à 20 % en poids des monomères M(1) polymérisés dans l'étape 1 et l'addition du mélange de monomères M(2) ne s'effectuant pas avant la fin de l'addition du mélange de monomères M(1), **caractérisé en ce que** la polymérisation dans l'étape de polymérisation 2 et les éventuellement autres étapes de polymérisation s'effectue en présence de quantités résiduelles de l'amorceur I(1) ajouté dans la 1$^{re}$ étape ou par addition d'une nouvelle quantité d'amorceur I(1) et la température dans le récipient de réaction est d'au moins 70 °C du début de l'étape 1 à la fin de l'étape 2b dans la dernière étape de polymérisation ;

2. Procédé selon la revendication 1, **caractérisé en ce que** l'intervalle de temps entre le moment de la fin de l'addition des monomères M(1) ou de la fin de l'addition de l'amorceur I(1) et le début de l'addition des monomères M(2) est d'au moins 5 minutes.

3. Procédé selon la revendication 1 ou 2, **caractérisé en ce que** l'addition de l'amorceur I(1), ne se termine pas avant la fin de l'addition des monomères M(1).

4. Procédé selon l'une quelconque des revendications précédentes, **caractérisé en ce que** les monomères M(1) contiennent de 90 à 99,9 % en poids d'un mélange de monomères qui est constitué

- d'au moins un acrylate d'alkyle en $C_2$-$C_{20}$ et
- d'au moins un autre monomère, choisi parmi l'acrylate de méthyle, des méthacrylates d'alkyle en $C_1$-$C_4$, des monomères vinylaromatiques, l'acrylonitrile et le méthacrylonitrile.

5. Procédé selon l'une quelconque des revendications précédentes, **caractérisé en ce que** les monomères M(2) ou M(i) utilisés dans la 2$^e$ étape de polymérisation et éventuellement les autres étapes de polymérisation contiennent moins de 0,1 % en poids de monomères comportant des groupes acides, par rapport à la quantité chaque fois utilisée de M(2) ou, respectivement, M(i).

6. Procédé selon l'une quelconque des revendications précédentes, **caractérisé en ce que** les monomères M(2) ou M(i) utilisés dans la 2$^e$ étape de polymérisation et éventuellement les autres étapes de polymérisation ne contiennent pas ou contiennent moins de 0,01 % en poids de monomères à insaturation polyéthylénique.

7. Procédé selon l'une quelconque des revendications précédentes, **caractérisé en ce que** les monomères M(2) ou M(i) utilisés dans la 2$^e$ étape de polymérisation et éventuellement les autres étapes de polymérisation comprennent exclusivement des monomères hydrophobes à insaturation monoéthylénique ayant une hydrosolubilité inférieure à 30 g/l à 25°C (1 bar).

8. Procédé selon l'une quelconque des revendications précédentes, **caractérisé en ce que** les monomères M(1) contiennent de 0,1 à 5 % en poids, par rapport à la quantité des monomères M(1), d'au moins un monomère comportant au moins un groupe acide.

9. Procédé selon l'une quelconque des revendications précédentes, **caractérisé en ce que** la quantité totale de tous les monomères M(2) et éventuellement M(i) vaut de 1 à 10 % en poids, par rapport aux monomères M(1).

10. Procédé selon l'une quelconque des revendications précédentes, **caractérisé en ce que** le produit de polymérisation P(1) de la première étape de polymérisation présente une température de transition vitreuse $T_g^1$ et le mélange de monomères M(2) ou M(i) polymérisé dans la 2$^e$ ou la i$^e$ étape de polymérisation correspond à un produit de polymérisation P(2) ou, respectivement P(i) ayant une température théorique de transition vitreuse $T_g^2$ ou respectivement $T_g^i$ (calculée selon Fox) qui est supérieure d'au moins 10 K à $T_g^1$.

11. Procédé selon l'une quelconque des revendications précédentes, **caractérisé en ce que** la différence des températures de transition vitreuse $T_g^2$-$T_g^1$ ou, respectivement, $T_g^i$-$T_g^1$, est d'au moins 40 K.

12. Procédé selon l'une quelconque des revendications précédentes, **caractérisé en ce que** le mélange de monomères M(1) utilisé dans l'étape 1 correspond à un produit de polymérisation P(1) ayant une température théorique de transition vitreuse $T_g^1$ (calculée selon Fox) n'excédant pas 0°C.

13. Dispersion aqueuse de polymère pouvant être obtenue selon un procédé des revendications 1 à 12.

**14.** Poudre de polymère, pouvant être obtenue par évaporation des composants volatils de la dispersion aqueuse de polymère provenant de la revendication 13.

**15.** Utilisation de dispersions aqueuses de polymères, pouvant être obtenues conformément à un procédé selon la revendication 12, ou d'une poudre de polymère pouvant être obtenue par évaporation des composants volatils à partir de la dispersion de polymère, pour la production de colles autoadhésives.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9810001 A
- US 4269749 A
- EP 614922 A
- EP 40419 B
- EP 567812 A

**In der Beschreibung aufgeführte Nicht-Patentliteratur**

- Methoden der organischen Chemie. **Houben-Weyl.** Makromolekulare Stoffe. Georg-Thieme-Verlag, 1961, vol. XIV/1, 411-420
- Methoden der organischen Chemie. **Houben-Weyl.** Makromolekulare Stoffe. Georg-Thieme-Verlag, 1961, vol. XIV/1, 192-208
- **W. Mächtle.** Angew. Makromolekulare Chemie. 1984, vol. 185, 1025-1039
- **W. Mächtle.** ebenda. 1988, vol. 162, 35-42
- Encyclopedia of Polymer Science and Technology. John Wiley & Sons Inc, 1966, vol. 5, 847
- *Tackifier sind beispielsweise aus Adhesive Age,* Juli 1987, 19-23
- *Polym. mater. Sci. Eng.,* 1989, vol. 61, 588-592